# EUROPEAN PATENT APPLICATION

(11) **EP 1 818 241 A2**
(43) Date of publication of application: **15.08.2007**
(21) Application number: 07001915.3
(22) Date of filing: 29.01.2007
(51) Int. Cl.: B62D 5/04

(54) **Motor for electric power steering apparatus and method of manufacturing a dynamic damper**

(30) Priority: 08.02.2006 JP 2006030762; 29.05.2006 JP 2006148385
(71) Applicant: NSK Ltd., Shinagawa-ku Tokyo (JP)
(72) Inventor: Hirakawa, Tomohisa, Maebashi-shi Gunma 371-8527 (JP); Nagano, Suguru, Maebashi-shi Gunma 371-8527 (JP)
(74) Representative: Grünecker, Kinkeldey, Stockmair & Schwanhäusser Anwaltssozietät

(57) **Abstract**

To reduce the vibration appearing at amotor for an electric power steering apparatus and further reduce noise caused by the vibration generated from the motor for an electric power steering apparatus. The motor for an electric power steering apparatus includes a rotor, a stator and a yoke 12 which houses the rotor and the stator therein and pivotally supports the rotation shaft 14 of the rotor so as to rotate freely. At least one annular band 26 is attached via an elastic member 28 to the outer peripheral surface of the yoke 12.

## Description

### BACKGROUND OF THE INVENTION

### 1. Field of the Invention

The present invention relates to a motor for an electric power steering apparatus and, in particular, relates to a reduction of vibration and noise of a motor for an electric power steering apparatus which has a yoke for hosing a rotor and a stator therein and pivotally supporting the rotation shaft of the rotor so as to rotate freely.

Further, the present invention also relates to a method of manufacturing and attaching a dynamic damper, having a spring mass system for suppressing rotational vibration of a motor, to the peripheral surface of the yoke portion of the motor.

### 2. Description of Related Art

As motors, there have been proposed various types of motors such as a stepping motor which is used for a copying machine or a facsimile apparatus and a motor which is used for an electric power steering apparatus. When fixing such motors, in order to improve the vibration absolving efficiency, for example, there is proposed a structure in which one end side of the rotation shaft of the motor is fixed to an attachment plate via an anti-vibration mounting member, a dynamic damper is provided at the other end side of the rotation shaft of the motor, and an air cooling fin is provided at a mass portion of the dynamic damper (see Japanese Patent Unexamined Publication JP-A-2004-28295). Further, there is proposed a method for reducing the vibration in an electric power steering apparatus (see Japanese Patent Unexamined Publication JP-A-2005-318744).

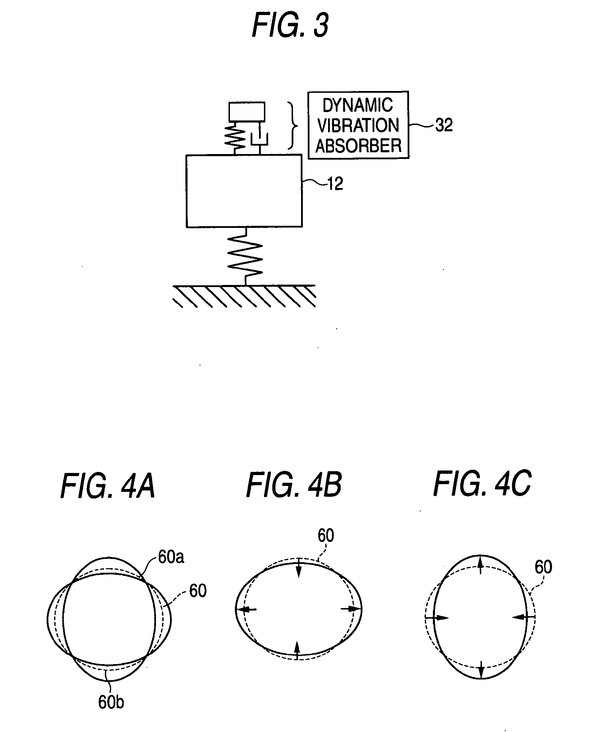

When driving and rotating a motor 10 for an electric power steering apparatus, there may be generated some noise due to the vibration of a stator and a yoke 12. This vibration includes natural vibration of the motor, for example. As the natural vibration of the motor, an annular secondary natural vibration mode may appear as the contour vibration of the motor (stator and yoke) 60 as shown in Figs. 4A to 4C, for example. To be concrete, when there arises no vibration, the motor (stator and yoke) 60 has an external contour shown by dotted lines in the figures. In the annular secondary natural vibration mode, the motor 60 alternately repeats two modes continuously, that is, a mode in which upper and lower portions of the external contour shrink in the radial direction and the left and right portions thereof extend in the radial direction as shown in Fig. 4B. Another mode in which the left and right portions of the external contour shrink in the radial direction and the upper and lower portions thereof extend in the radial direction as shown in Fig. 4C. As a result, since the vibrations of the annular secondary natural vibration mode is repeated, there appears a minimum amplitude portion 60a of the vibration and a maximum amplitude portion 60b of the vibration at the external contour of the motor 60 as shown in Fig. 4A.

Further, in a small-sized motor, in particular, in a motor applied as a driving source for an electric power steering apparatus for a vehicle, a dynamic damper is attached in order to reduce vibration and noise caused by the vibration generated at the time of driving the motor. The motor for an electric power steering apparatus is required to be miniaturized due to the requirement for the reduction of a cost and the layout of the parts of a vehicle.

As the dynamic sensor, there is a proposal of adding a fin for heat dissipation to a function as the dynamic damper as described in Japanese Patent Unexamined Publication JP-A-2004-28295.

However, the attachment of the dynamic damper is restricted in the magnitude and shape thereof due to the layout of the parts of a vehicle, so that sufficient vibration-damping properties and silent properties cannot be obtained. Further, in contrast, in order to secure the vibration-damping properties and silent properties in a limited space, it is required to redesign the motor itself again, which results in the complication of the structure and the cost-up. Further, like the dynamic damper of the JP-A-2004-28295, the addition of another function to the original vibration-damping function results in the further enlargement of the size.

### SUMMARY OF THE INVENTION

The invention has been made in view of the aforesaid problem of the related arts and an object of the invention is to reduce the vibration appearing at a motor for an electric power steering apparatus and to reduce noise generated by the vibration appearing at the motor for an electric power steering apparatus.

Further, another object of the invention is to obtain a method of manufacturing a dynamic damper which is small in size, easy in its attachment procedure and can obtain vibration-damping properties and silent properties in a limited space when a motor is attached in the limited space.

In order to attain the aforesaid object, according to the invention, there is provided a motor for an electric power steering apparatus which applies a steering assistance force to a steering mechanism of a vehicle, comprising a yoke; and at least one annular band attached to an outer peripheral surface of the yoke via an elastic member.

According to the aforesaid invention, the vibration caused by mechanical or electromagnetic vibration generated at the motor for an electric power steering apparatus acting as a main-vibration system, for example, natural vibration of the motor (see Figs. 4A to 4C, for example) can be suppressed by a sub-vibration system acting as a dynamic damper which is constituted by the elastic member and the annular band attached to the outer peripheral surface of the yoke, and further the noise generated from the main-vibration system can be insulated by the annular band.

Further, at the time of constituting the motor for the electric power steering apparatus, a weight or an annular member with a predetermined weight may be wound around the annular band. In this case, a plurality of the annular members each constituted by the annular band and the weight may be provided. Further, the elastic member may be configured by a single elastic member which is formed in an annular shape and integrally attached to the outer peripheral surface of the yoke, or configured by a plurality of elastic members which are dispersedly disposed on the outer peripheral surface of the yoke.

According to the invention, the amplitude of the vibration of the motor for the electric power steering apparatus can be made small thereby to suppress the vibration and also the noise can be made small due to the noise insulation effects of the annular band.

In order to achieve another aspect of the invention, according to the invention, there is provided a method of manufacturing and attaching a dynamic damper,
the dynamic damper provided on a peripheral surface of a yoke of a motor and comprising:
a sound insulating belt comprising:
   a cylindrical portion which surrounds the peripheral surface of the yoke; and
   matching portions at both end of the longitudinal direction thereof; and
a spring masssystem which attenuates rotational vibration of the motor and provided on the matching portions, the method comprising:
   pasting an elastic sheet on one surface of a metal sheet;
   cutting the metal sheet into belt shape to form the sound insulation band;
   holding both end portions of a longitudinal direction of the sound insulation band;
   bending the sound insulation band so as to be an arcuate shape while holding the both end portions thereof in such a manner that an angle θ defined between the end portion and a remaining portions of the sound insulation band is a right angle with a predetermined allowable tolerance, and also a distance between the end portions of the sound insulation band is larger than an outer diameter of the yoke, thereby forming the matching portions from the end portions and the cylindrical portion from the remaining portion,
   forming a through hole and a projection portion at a pair of the matching portions, respectively, in a manner that the projection portion fits to the through hole on a coaxial line when the pair of the matching portions are matched each other;
   winding the sound insulation band around a peripheral surface of the yoke;
   matching the pair of the matching portions each other; and
   attaching the mass portion having a mass based on vibration-damping properties due to the spring mass system at a time of fitting the projection portion to the through hole.
   Note that the step of pasting an elastic sheet on one surface of a metal sheet can be performed together with the step of cutting the metal sheet into belt shape to form the sound insulation band.

According to the invention, as the first step, the elastic sheet is pasted on the one surface of the belt-shaped metal sheet to form the sound insulation band. Then, as the second step, the both end portions of the longitudinal direction of the sound insulation band are supported to remain the matching portion at each of the both end portions, and each of the matching portions is bent with the angle e which is the right angle with the predetermined allowable tolerance in a manner that the distance between the matching portions thus bent is larger than the outer diameter of the yoke of the motor.

Next, as the third step, the through hole and the projection portion are formed at the pair of the matching portions, respectively, in a manner that the projection portion fits to the through hole on the coaxial line when the pair of the matching portions are abutted to each other. Incidentally, this third step may be executed before the second step and may be applied as the positioning standard for supporting the matching portions. In the fourth step, the yoke of the motor is inserted into the thus bent sound insulation band, then wound around the peripheral surface of the yoke, then the pair of the matching portions are abutted to each other, and the mass portion having the mass based on vibration-damping properties due to the spring mass system is attached at the time of fitting the projection portion to the through hole. Although this fourth step is the attaching procedure of the dynamic damper to the yoke of the motor, the attachment of the mass portion is included as the final step of the attaching procedure, whereby the manufacturing of the dynamic damper is completed by the attachment of the mass portion.

In this manner, according to the invention, since the base portion for the vibration damping and sound insulation is configured in a band shape, a small-sized and efficient dynamic damper can be obtained. Further, since the distance between the matching portions after the bending procedure is set to be larger than the outer diameter of the yoke of the motor, the attachment procedure can be facilitated. Furthermore, according to the invention, the bending step is characterized by being performed by a pressing procedure.

Since the sound insulation band is bent in an arc shape by the pressing procedure, the elastic sheet can not be exfoliated from the metal sheet and so the bending procedure can be realized. Further, according to the invention, the sound insulation band is characterized by being configured by a single sheet. Since the single sound insulation band is wound around the yoke, the manufacturing procedure can be facilitated.

Alternatively, the sound insulation band is formed by a plurality of sheets. The plurality of sheets are coupled in series in a manner that the through hole and the projection portion formed at the matching portions of different sheets of the sound insulation band are fitted to each other and wound around the outer peripheral surface of the yoke of the motor. In this case, since the length of the arc shape of each of the plural sheets of the sound insulation band becomes short, the bending procedure can be facilitated.

Further, the projection portion is formed by an emboss procedure and so configured in a cylindrical shape, and the mass portion is attached to the cylindrical projection portion. In this case, since the mass portion is merely required to be inserted into the cylindrical projection portion, the attachment procedure can be facilitated. Furthermore, each of the through hole and the projection portion is formed in a non-circular shape thereby to prevent a rotation of the mass portion being attached. In this case, since the projection portion is formed in the non-circular shape, the mass portion can not be rotated after being attached to the projection portion, whereby the degradation of the vibration-damping properties and silent properties due to the movement or deformation of the mass portion can be prevented.

As explained above, the invention can attain excellent effects that there is provided with a method of manufacturing a dynamic damper which is small in size, easy in its attachment procedure and can obtain vibration-damping properties and silent properties in a limited space when a motor is attached in the limited space.

### BRIEF DESCRIPTION OF THE DRAWINGS

Fig. 1 is a perspective view of a motor for an electric power steering apparatus according to an embodiment of the invention;
Fig. 2 is a perspective view of a dynamic damper;
Fig. 3 is a constructive diagram for explaining the principle of the dynamic damper (dynamic vibration absorber);
Fig. 4A is a schematic diagrams for explaining an annular secondary natural vibration mode;
Fig. 4B is a schematic diagrams for explaining an annular secondary natural vibration mode; and
Fig. 4C is a schematic diagrams for explaining an annular secondary natural vibration mode.
Fig. 5 is a sectional side view of an EPS motor according to an embodiment;
Fig. 6 is a left side view of Fig. 5;
Fig. 7A is a perspective view showing a pasting procedure of the invention in which a rubber is pasted on a metal sheet;
Fig. 7B is a perspective view showing a cutting procedure of the invention in which the metal sheet is cut into a belt shaped pieces;
Fig. 8A is a front view showing a bending procedure of a sound insulation belt using a bending jig;
Fig. 8B is a front view showing a bending procedure of a sound insulation belt using a bending jig;
Fig. 9A is a sectional view showing a forming procedure of a projection portion at matching portion;
Fig. 9B is a sectional view showing a forming procedure of a through hole at matching portion;
Fig. 10A is a front view showing a bending procedure with respect to a yoke;
Fig. 10B is a sectional view showing a caulking procedure after the bending procedure of the sound insulation belt; and
Fig. 10C is a sectional view showing a fitting procedure of a mass portion.

### DETAILED DESCRIPTION OF EXEMPLARY EMBODIMENTS OF THE INVENTION EMBODIMENTS

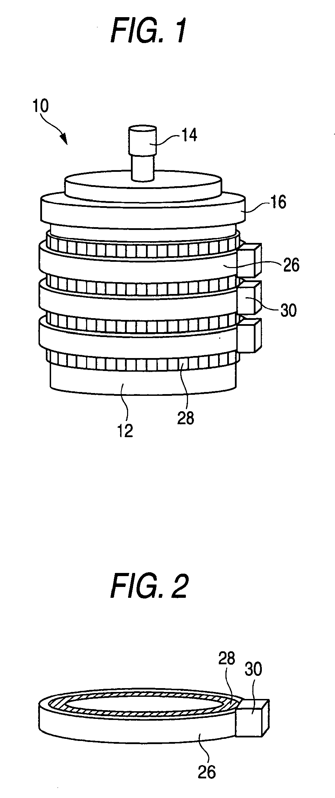

An embodiment of the invention will be explained with referenced to drawings. Fig. 1 is a perspective view of a motor for an electric power steering apparatus according to an embodiment of the invention. Fig. 2 is a perspective view of a dynamic damper.

In Figs. 1 and 2, as a motor for an electric power steering apparatus, the motor 10 has a yoke 12 formed in an almost bowl or cylindrical shape in which a rotor (not shown) and a stator (not shown) are housed. The yoke 12 pivotally supports the axially one end side of the rotation shaft 14 of the rotor so as to rotate freely. An annular flange 16 is attached to the axially end portion of the outer peripheral surface of the yoke 12. The flange 16 is fixed in a manner that the flange fastening portion thereof is fixed to a steering column by means of bolts (fastening member), for example.

Three annular bands 26 are arranged on the outer peripheral surface of the yoke 12 along the axial direction thereof. Each of the annular bands 26 is formed as an annular band capable of insulating sound. For example, the annular bands 26 is formed such that a metal plate is cut in a rod shape, and the rod member is processed in an almost ring or cylindrical shape by a press work. Then a fastening portion is formed at each of the both ends of each of the rod members, then each of the fastening portions is caulked and the caulked fastening portions of the three annular bands are coupled to each other. Then, as shown in Fig. 2, the three annular bands are attached to the outer peripheral surface of the yoke 12 via an annular elastic member 28. Butyl rubber with a high attenuation rate, for example, may be used as the annular elastic member 28. Instead of the annular elastic member, the elastic member 28 may be configured by a plurality of elastic members which are dispersedly disposed on the outer peripheral surface of the yoke 12.

Each of the annular bands 26 may be configured as an annular band with a weight in a manner that a screw or a bolt for fastening the fastening portion acts as a weight 30 having a predetermined weight.

As shown in Fig. 3, a dynamic vibration absorber configured by the respective annular bands 26 and the elastic member 28 constitutes a sub-vibration system coupled in series to the outer peripheral surface of the stator and the yoke 12 acting as a main-vibration system. When a vibration occurs at the main-vibration system, the vibration energy of the original main-vibration system can be absorbed by the sub-vibration system when the vibration frequency of the sub-vibration system is set to be same as that of the main-vibration system. Thus, the generation of noise due to the vibration of the main-vibration system can be suppressed.

Since the dynamic vibration absorber 32 acting as the sub-vibration system can absorb the vibration energy of the main-vibration system even if the vibration frequency of the dynamic vibration absorber 32 is not necessarily set to be same as that of the main-vibration system, the generation of noise due to the vibration of the main-vibration system can be suppressed.

According to the embodiment, when the weight acting as the weighting portion of the annular band 26 is provided at a portion of the yoke 12 where the amplitude of the vibration is largest, the vibration can be suppressed even when the vibration occurs. Further, the noise can be made low due to the sound insulation effects of the annular bands 26.

Further, since the annular members having the dynamic damping effects for suppressing the vibration of the motor 10 for an electric power steering apparatus are provided separately from the motor 10 for the electric power steering apparatus, vibration and noise that is a problem to be solved can be suppressed without changing the design of the motor 10 for the electric power steering apparatus. Thus, both the development period and the cost of the motor can be reduced.

Next, another embodiment of the invention will be explained with referenced to drawings.

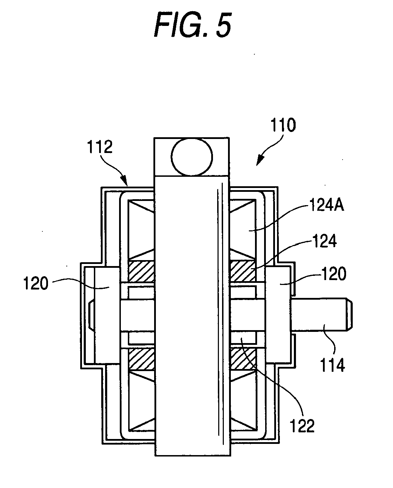

Fig. 5 shows a motor for an Electric Power Steering apparatus (EPS motor) 110 according to an embodiment of the invention. A rotor shaft 114 protrudes from the one end surface (the right side end surface in Fig. 5) of a yoke 112 covering the constituent parts of the motor 110. The rotor shaft 114 is supported by bearings 120 provided at the left and right end portions in Fig. 5 of the yoke 112 and fits into a rotor 122 within the yoke 112. A stator 124 is provided within the motor 110 and opposes to the outer peripheral surface of the rotor 122. A stator coil 124A is wound around the stator 124. The current supply to the stator coil 124A is controlled to change the magnetic field between the stator 124 and the rotor 122, whereby the stator and the rotor rotate relatively (in practice, the rotor 122 rotates). As a result, the rotational driving force of the rotor can be outputted to the outside (for example, a gear box) via the rotor shaft 114.

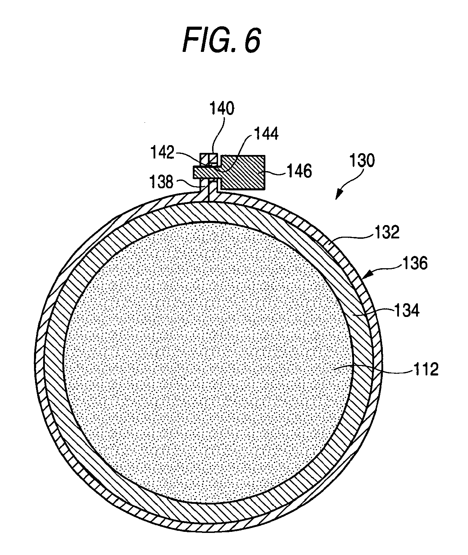

As shown in Fig. 6, a dynamic damper 130 manufactured according to the invention is wound around the outer peripheral surface of the yoke 112. The dynamic damper 130 is configured by a sound insulation band 136 which is formed by pasting an elastic member (rubber 124 such as butyl rubber etc.) on the inner peripheral surface of a metal plate member (metal sheet) 132 of a thin-width belt shape. The sound insulation band 136 is wound around the entire peripheral surface of the yoke 112.

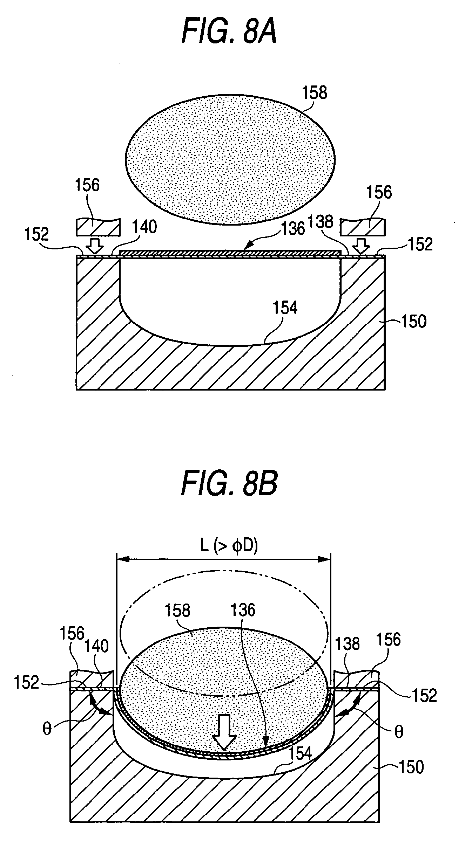

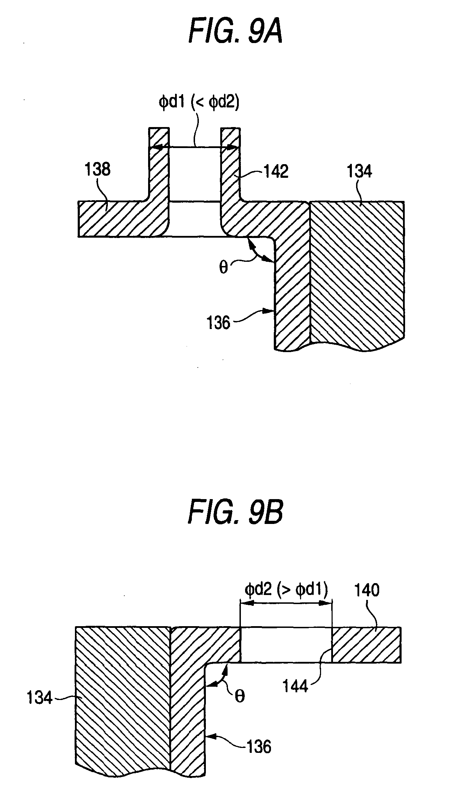

The winding end portions of the sound insulation band 136 constitute a pair of matching portions 138, 140 each of which is bent outward almost orthogonally (angle θ as shown in Figs. 8A, 9A and 9B). Thus, when the sound insulation band 136 is wound around the entire peripheral surface of the yoke, the pair of matching portions 138, 140 are abutted to match each other. A cylindrical projection portion 142 formed by an emboss processing is formed at the one of the matching portions 138 and a circular through hole 144 is provided at the other of the matching portions 140.

The outer diameter Φd1 of the projection portion 142 is smaller than the inner diameter Φd2 of the through hole 144 (Φd1 < Φd2). As a result, when the pair of matching portions 138, 140 are matched each other, the projection portion 142 is inserted into the through hole 144.

The tip end of the projection portion 142 protruded from the opposite side of the through hole 144 is smashed by a so-called caulking processing so that its outer diameter is enlarged thereby to prevent the projection portion from getting out. Thus, the sound insulation band 136 wound around the outer peripheral surface of the yoke 112 is held in a state of being adhered to the outer peripheral surface of the yoke 112. A mass portion 146, having a mass for damping vibration obtained by designing in advance, is provided at the projection portion 142. The mass portion 146 has a column shape with a step configured in a manner that a small diameter portion almost coincident with the inner diameter of the projection portion 142 continues to a large diameter portion larger than the small diameter portion. The small diameter portion is fitted to the projection portion 142.

The metal plate member of the sound insulation band 136 configured in the aforesaid manner attains the sound insulation effects. The combination of the metal plate member and the elastic member attains the vibration damping effects. That is, when the dynamic damper 130 is attached to the motor 110, sound generated at the time of driving the motor is reduced. Further, the vibration generated at the time of driving the motor is reduced due to the elastic coefficient of the rubber 134 and the mass of the mass portion 146.

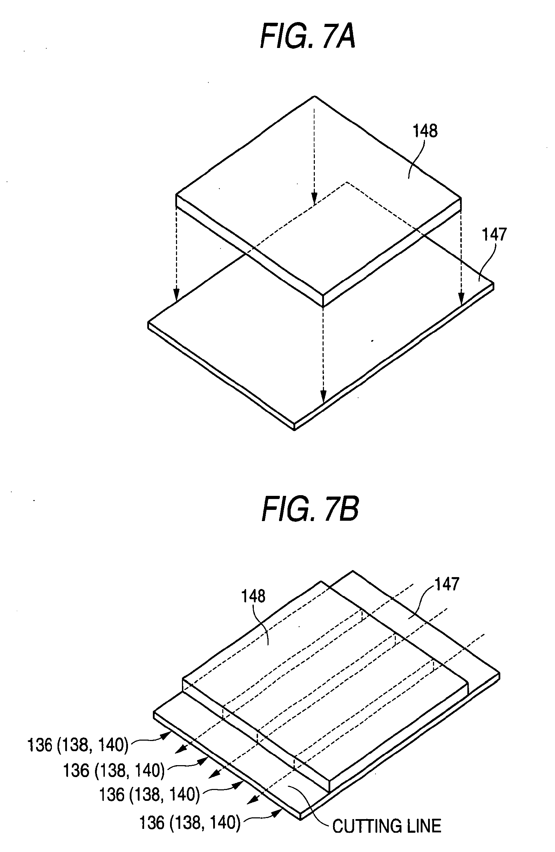

Hereinafter, operations of the embodiment will be explained. Figs. 7 to 10C are diagrams showing the procedure of manufacturing the dynamic damper 130 attached to the motor 110. The manufacturing procedure of the dynamic damper 130 will be explained with reference to Figs. 7 to 10C. Figs. 7, 8, 9 and 10 correspond to the first, second, third and fourth processes of the invention, respectively.

First, as shown in Fig. 7A, a rubber sheet 148 is pasted at a predetermined position of a rectangular metal sheet 147. Then, as shown in Fig. 7B, the metal sheet is cut along dotted lines shown by arrows in Fig. 7B so as to have a width suitable at the time of winding around the motor 110 (the completion of the sound insulation band 136) to form a belt shaped pieces. Fig. 8A shows a state where the sound insulation band 136 thus formed by the cutting is laid between supporting surfaces 52 at the both ends of a bending jig 150. An intermediate portion of the jig 150 forms a recess portion 154 bent in an arc shape. In this state, a chuck 156 disposed so as to oppose to the supporting surface 152 is moved down to hold the matching portions 138, 140 formed at the both end portions of the sound insulation band 136 (see bold arrows in Fig. 8A).

On the other hand, a bending head 158 is placed at the upper portion in opposite to the recess portion 154 disposed at the intermediate portion of the jig 150. When the bending head 158 is moved down, the sound insulation band 136 is bent gradually in an arc shape as shown in Fig. 8B in accordance with the down movement of the bending head. As shown in Fig. 8A, the size L of the width of the recess portion 154 is larger than the outer diameter φD of the yoke 112, and so the size between the matching portions 138, 140 after the bending process is larger than the outer diameter ΦD of the yoke 112. Thus, at the time of winding around the yoke 112, the yoke 112 can be inserted from the axially perpendicular direction with respect to the belt 136. That is, the belt 136 surrounds the yoke 112.

Next, Fig. 9A shows a state where the projection portion 142 is formed at the one matching portion 138. Since the projection portion 142 is formed by the emboss processing, the projection portion is formed integrally with the matching portion 138. In this case, the outer diameter of the projection portion 142 is set to be Φd1. Further, Fig. 9B shows a state where the through hole 144 is formed at the other matching portion 140. The through hole 144 is formed by a hole forming process using a drill etc. so as to have an inner diameter of Φd2. The outer diameter Φd1 of the projection portion 142 formed at the one matching portion 138 is smaller than the inner diameter of Φd2 of the through hole 144 formed at the other matching portion 140 (Φd1 < Φd2).

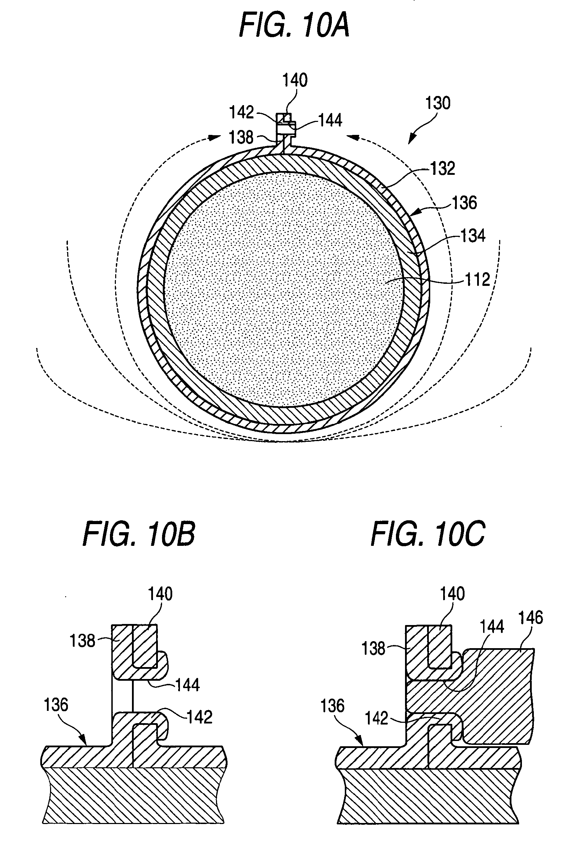

Next, as shown in Fig. 10A, the portion corresponding to the belt 136 of the dynamic damper 130 is wound around the outer peripheral surface of the yoke 112 (see a dotted line shown by an arrow in Fig. 10A). In this case, as described above, since the distance between the pair of matching portions 138, 140 is larger than the outer diameter of the yoke 112, firstly the intermediate portion along the longitudinal direction of the sound insulation band 136 is abutted against the outer peripheral surface of the yoke 112, whereby the sound insulation band can be wound equally in the left and right directions. When the winding procedure is completed, the pair of matching portions 138, 140 are abutted to match each other, whereby the projection portion 142 is inserted into the through hole 144.

As shown in Fig. 10B, the tip end of the projection portion 142, which is inserted into the through hole 144 and protruded from the opposite side, is crushed by the so-called caulking processing and so the outer diameter thereof becomes large, whereby the projection portion is prevented from getting out. Finally, as shown in Fig. 10C, the small diameter portion of themassportion 146 is fit to the projection portion 142, whereby the manufacturing of the dynamic damper 130 is completed and simultaneously the attachment of the dynamic damper to the motor 110 is completed.

As explained above, according to the embodiment, even if the size and the shape are restricted due to the layout of the parts of a vehicle, the dynamic damper 130 can be attached to a small space at the periphery of the motor 110, so that the sufficient vibration-damping properties and silent properties can be secured. Further, since the construction is simple, the number of the parts is small and the manufacturing process is easy, manufacturing cost of the dynamic damper can be reduced.

In the embodiment, at the time of cutting the metal sheet 147 in a state where the rubber sheet 148 is pasted on the metal sheet 147, it is preferable to cut by the pressing from the metal sheet 147 surface side where the rubber sheet 148 is not pasted so that burr does not appear. Further, when it is difficult to cut the metal sheet after pasting the rubber sheet 148 thereon, the metal sheet and the rubber sheet may be pasted to each other after each of them is cut in a belt shape.

Although, in the embodiment, the projection portion 142 and the through hole 144 are formed after the bending procedure, the projection portion 142 and the through hole 144 may be formed before the bending procedure and both the projection portion and the through hole may be used for the positioning at the time of the holding procedure using the chuck 156. Further, although, in the embodiment, the sound insulation band 136 is positioned by the bending jig 150 and bent by the bending head 158, the sound insulation band may be wound around a cylindrical jig and pressed.

Furthermore, in the case where the mass portion 146 to be attached last may interfere with peripheral parts, the mass portion 146 may be configured as a flat shape and turned up inside. Furthermore, when the small diameter portion provided at the mass portion 146 is not formed in a circular shape but in a polygonal shape, the mass portion acts to prevent the rotation after the fitting procedure.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

## Claims

1. A motor for an electric power steering apparatus which applies a steering assistance force to a steering mechanism of a vehicle, comprising a yoke; and at least one annular band attached to an outer peripheral surface of the yoke via an elastic member.

2. The motor for the electric power steering apparatus according to claim 1, wherein the annular band is added with a weight having a predetermined weigh thereon.

3. The motor for the electric power steering apparatus according to claim 1, wherein the elastic member is configured by a single elastic member which is formed in an annular shape and integrally attached to the outer peripheral surface of the yoke, or configured by a plurality of elastic members which are dispersedly disposed on the outer peripheral surface of the yoke.

4. The motor for the electric power steering apparatus according to claim 1, wherein the annular band is configured not to have a complete annular shape but configured to have an arc shape with a predetermined gap, or configured by a plurality of members each having an arc shape.

5. A method of manufacturing and attaching a dynamic damper,
the dynamic damper provided on a peripheral surface of a yoke of a motor and comprising:
a sound insulating belt comprising:
a cylindrical portion which surrounds the peripheral surface of the yoke; and
matching portions at both end of the longitudinal direction thereof; and
a spring mass systemwhich attenuates rotational vibration of the motor and provided on the matching portions, the method comprising:
pasting an elastic sheet on one surface of a metal sheet;
cutting the metal sheet into belt shape to form the sound insulation band;
holding both end portions of a longitudinal direction of the sound insulation band;
bending the sound insulation band so as to be an arcuate shape while holding the both end portions thereof in such a manner that an angle θ defined between the end portion and a remaining portions of the sound insulation band is a right angle with a predetermined allowable tolerance, and also a distance between the end portions of the sound insulation band is larger than an outer diameter of the yoke, thereby forming the matching portions from the end portions and the cylindrical portion from the remaining portion,
forming a through hole and a projection portion at a pair of the matching portions, respectively, in a manner that the projection portion fits to the through hole on a coaxial line when the pair of the matching portions are matched each other;
winding the sound insulation band around a peripheral surface of the yoke;
matching the pair of the matching portions each other; and
attaching the mass portion having a mass based on vibration-damping properties due to the spring mass system at a time of fitting the projection portion to the through hole.

6. The method of manufacturing the dynamic damper according to claim 5, wherein the bending step is performed by a pressing procedure.

7. The method of manufacturing the dynamic damper according to claim 5, wherein the sound insulation band is formed by a single sheet.

8. The method of manufacturing the dynamic damper according to claim 5, wherein the sound insulation band is formed by a plurality of sheets,
the plurality of sheets are coupled in series in a manner that the through hole and the projection portion formed at the matching portions of different sheets of the sound insulation band are fitted to each other and wound around the outer peripheral surface of the yoke of the motor.

9. The method of manufacturing the dynamic damper according to claims 5, wherein the projection portion is formed by an emboss procedure and so configured in a cylindrical shape, and the mass portion is attached to the cylindrical projection portion.

10. The method of manufacturing the dynamic damper according to claim 9, wherein each of the through hole and the projection portion is formed in a non-circular shape thereby to prevent a rotation of the mass portion being attached.
